# EUROPÄISCHE PATENTSCHRIFT

(11) **EP 2 941 321 B1**
(45) Veröffentlichungstag und Bekanntmachung des Hinweises auf die Patenterteilung: **14.09.2016**
(21) Anmeldenummer: 13805271.7
(22) Anmeldetag: 04.11.2013
(51) Int. Cl.: B05B 15/04, B65G 45/14

(54) **LACKAUSTRAGSYSTEM**
PAINT DISCHARGE SYSTEM
SYSTÈME D'ÉVACUATION DE PEINTURE

(30) Priorität: 09.11.2012 DE 102012022031
(43) Veröffentlichungstag der Anmeldung: 11.11.2015
(73) Patentinhaber: Venjakob Maschinenbau GmbH & Co. KG, 33378 Rheda-Wiedenbrück (DE)
(72) Erfinder: HAASE, Dirk, 33378 Rheda-Wiedenbrück (DE)
(74) Vertreter: DTS Patent- und Rechtsanwälte Schnekenbühl und Partner mbB
(86) Internationale Anmeldenummer: PCT/EP2013/003312
(87) Internationale Veröffentlichungsnummer: WO 2014/072039

(56) Entgegenhaltungen:
- EP-A1- 0 571 697
- EP-A1- 1 033 177
- GB-A- 2 053 120
- GB-A- 2 100 211

## Beschreibung

Die Erfindung befasst sich mit einem Lackaustragsystem mit einen umlaufend antreibbaren Bandförderer zum Transport zu lackierender Werkstücke und wenigstens einer Lackaustrageinrichtung.

Aus dem Stand der Technik ist eine Vielzahl von Lackaustragsystemen bekannt.

In der EP 1033177 B1 ist eine Farbspritzanlage beschrieben, die einen Bandförderer mit einem Förderband bzw. Transportband und mindestens zwei Umlenktrommeln sowie eine Reinigungseinrichtung umfasst. Die Reinigungseinrichtung weist ein Abstreifband auf, das einer Umlenktrommel des Förderbands zugeordnet ist und gegenüber den Drehachsen der Umlenktrommeln des Förderbands schräg steht und bei flächigem Kontakt mit dem Förderband gegenüber diesem mit einer höheren Geschwindigkeit antreibbar ist. Ein Bandförderer mit Transportband und Reinigungseinrichtung ist aus der GB 2100211 A und der EP 0571697 A1 bekannt.

Nachteilig am Stand der Technik ist, dass der Wirkungsgrad der bekannten Lackrückgewinnungssysteme mit den heutigen Lacken, die eine andere Zusammensetzung aufweisen, optimierbar ist.

Es ist daher Aufgabe der vorliegenden Erfindung, ein Lackaustragsystem vorzusehen, bei der die Nachteile aus dem Stand der Technik überwunden werden. Folglich ist eine Aufgabe der vorliegenden Erfindung, ein Lackaustragsystem vorzusehen, das eine verbesserte Lackrückgewinnung vorsieht.

Diese Aufgabe wird gelöst durch ein Lackaustragsystem gemäß Anspruch 1.

Weitere vorteilhafte Ausgestaltungen der vorliegenden Erfindung sind in den abhängigen Ansprüchen angegeben.

Gemäß einem Aspekt der Erfindung ist ein Lackaustragsystem vorgesehen, umfassend einen umlaufend antreibbaren Bandförderer zum Transport zu lackierender Werkstücke, wobei der Bandförderer ein Förderband und wenigstens zwei Umlenktrommeln aufweist, und wenigstens eine Lackaustrageinrichtung für das Förderband, wobei die Lackaustrageinrichtung ein umlaufend antreibbares Abstreifband und wenigstens zwei Umlenktrommeln aufweist, wobei auf dem Abstreifband wenigstens ein zusätzliches Abstreifmittel vorgesehen ist, das gegen das Förderband drückt, wobei die Länge des horizontalen oberen Teils des Abstreifbandes kleiner als die Breite des Förderbandes ist.

Ein Bandförderer (auch Gurtbandförderer oder Gurtförderer) ist eine stationäre Förderanlage, die zur Familie der Stetigförderer gehört. Sie weisen eine sehr hohe Betriebssicherheit und sind zuverlässige Transportsysteme, die ökonomisch, sehr produktiv und umweltfreundlich auf Grund ihres geringen Energiebedarfs arbeiten.

Besonders bevorzugt sind das Förderband und das Abstreifband Endlos-Bänder.

Eine Lackaustrageinrichtung ist eine Vorrichtung die neben einem Abstreifband (Gurtband) auch Mittel zur Aufnahme für Reinigungs- oder Rückgewinnungszwecke vorsieht. Abstreifmittel sind bevorzugt Rakeln oder Metallschienen.

Besonders bevorzugt weist die Metallschiene Segmente auf, die sich infolge einer Krümmung des Abstreifbandes entsprechend verstellen können und die sich auf einem geraden Stück wieder zusammenschieben um so eine durchgehende Kante zu bilden.

Die Lackaustrageinrichtung ist bevorzugt unterhalb des Förderbandes angeordnet. Bevorzugt ist die Lackaustrageinrichtung (und damit das Abstreifband) gegenüber dem Bandförderer (und damit dem Förderband) in der horizontalen Bandebene um 85 bis 95° gedreht angeordnet.

Besonders bevorzugt ist ein Winkel von 90°. Hierdurch lässt sich die überschüssige Farbe am Besten mittels Abstreifmittel vom Förderband abziehen.

In einer weiteren bevorzugten Ausführungsform ist die Neigung des Abstreifbandes gegenüber der Lage des Förderbandes horizontal variabel. Bevorzugt ist ein Winkel zwischen 0° und 15°. Besonders bevorzugt ist der Winkel zwischen 8° und 12°. Hierdurch lässt sich der Anpressdruck auf das Abstreifmittel entsprechend anpassen und die Farbe gezielter vom Förderband abnehmen.

Bevorzugt ist das Abstreifmittel in der Längsrichtung des Abstreifbandes durchgehend geradlinig angeordnet. Dadurch ist ein gleichmäßiges Abtragen der Farbe zu gewährleisten.

Das Abstreifmittel ist bevorzugt elastisch ausgebildet und ist separat auf dem Abstreifband anbringbar. Dadurch sind auftretende Querkräfte an der Rakel bei der Lackaustragung verringerbar.

Besonders bevorzugt weist das Abstreifband ein inneres Führungsband zur laufseitigen Zwangsführung auf. Damit ist es möglich, die Rakel mechanisch weniger stark zu belasten.

Eine vorteilhafte Weiterbildung sieht vor, dass die Länge des Abstreifbandes mindestens der Breite des Förderbands entspricht. Dadurch ist es möglich die gesamte Breite des Förderbandes von aufgesprühter Farbe abzunehmen (und später rückführen).

Bevorzugt besteht das Abstreifband aus Polyester oder aus PU-Material. Besonders bevorzugt ist das Abstreifband aus VPE (Folie mit aufkaschiertem PU Stollen), ein PTFE-Band, ein PTFE-Stollen-Band oder ein Polyesterrakel-Band.

Die Länge des horizontalen oberen Teils des Abstreifbandes ist kleiner als die Breite des Förderbandes. Dadurch lässt sich ein Kontakt des Abstreifmittels mit der Kante des Förderbandes gänzlich vermeiden.

In einer weiteren besonders bevorzugten Ausgestaltung sind Abdeckbereiche zu beiden Seiten des Förderbandes vorgesehen, die sich entlang der Bewegungsrichtung des Förderbandes erstrecken. Damit ist es möglich die Randbereiche des Förderbandes keinem Farbauftrag auszusetzen. Das Förderband kann in diesen Bereichen folglich auch nicht verschmutzt werden.

Eine weitere vorteilhafte Weiterbildung sieht vor, dass das Abstreifmittel eine Rakel ist. Eine Rakel ist ein dünnes Werkzeug, das eine scharfe- oder rund geschliffene Kante aufweist und bevorzugt aus einem geschliffenen Stahlband und besonders bevorzugt aus Kunststoff wie PVC, PU, Polyamid, Polester, PTB oder PTFE besteht. Die Rakel dient vorliegend dem Entfernen von überschüssiger Farbe an Transportbänder (Förderbändern).

Bevorzugt weist die Rakel einen V-förmigen Querschnitt auf. Mittels der V-förmigen Rakel lässt sich überschüssige Farbe am Förderband zügig und gründlich abstreichen/abziehen.

Besonders bevorzugt weist der V-förmige Querschnitt einen Winkel von 20° bis 100°, bevorzugt von 40° bis 80° und besonders bevorzugt von 60° aufweist. Bei einem Winkel von 20° bis 100° haben sich die besten Resultate für das Abstreifen des Lackes vom Förderband ergeben. In einer weiteren bevorzugten Ausgestaltung weist der V-förmige Querschnitt eine steilere Flanke bezüglich des Orts der Lackaustragung auf.

Besonders bevorzugt weist der V-förmige Querschnitt eine Höhe von 3 mm bis 3 cm, bevorzugt von 5 mm bis 1,5 cm und besonders bevorzugt von 8 mm bis 15 mm aufweist. Bei einer Höhe von 3 mm bis 3 cm haben sich die besten Resultate für das Abstreifen des Lackes vom Förderband ergeben.

Besonders bevorzugt weist die Rakel neben einem dreieckigen auch einen viereckigen, rechteckigen oder trapezförmigen Querschnitt auf. Damit ist bevorzugt ein Querschnitt für das Abstreifband verwendbar, der zunächst die eigentliche Dicke des Bandes, dann den entsprechenden Querschnitt der Rakel und dann wieder die Dicke des Bandes aufweist.

In einer bevorzugten Ausführungsform ist das Verhältnis der Höhe der Rakel zum Umlenktrommeldurchmesser 1:10 bis 1:20. Dadurch lässt sich ein schonender und stetiger Farbabtrag gewährleisten.

Gemäß einer weiteren vorteilhaften Weiterbildung ist vorgesehen, dass die Farbspritzanlage ferner mindestens eine Befeuchtungseinrichtung aufweist. Damit ist es möglich, die auf dem Förderband befindliche Farbe anzunässen/zu befeuchten, um sie besser vom Förderband zu lösen. Bevorzugt wird eine Flüssigkeit als Lösemittel auf Basis des verarbeiteten Lacksystems verwendet um den Lösevorgang zu beschleunigen.

Eine weitere vorteilhafte Weiterbildung sieht vor, dass ferner eine Schabvorrichtung bzw. eine Abziehvorrichtung an der Lackaustrageinrichtung vorgesehen ist. Der Schaber/Abzieher weist eine Form auf, die das Abstreifband mit der Rakel derart kämmt, so dass die Farbe infolge des Umlaufens des Bandes abschabbar/abziehbar ist. Bevorzugt wird die überschüssige Farbe in einem Lackauffangbehältnis gesammelt und kann dem Farbkreislauf wieder zugeführt werden.

Eine weitere vorteilhafte Weiterbildung sieht vor, dass die Geschwindigkeit des Abstreifbandes kleiner gleich 50m/min ist, bevorzugt kleiner gleich 5m/min und besonders bevorzugt kleiner gleich 3m/min. Je geringer die Geschwindigkeit, desto eher lässt sich ein mögliches Verschleißen am Abstreifmittel und am Förderband feststellen sowie ein höherer Grad an Farbaustrag gewährleisten.

Bevorzugt ist das Verhältnis der Geschwindigkeiten des Förderbandes zum Abstreifband 1:1 bis 1:4. Dadurch lässt sich die Farbe optimal vom Förderband abnehmen.

Besonders bevorzugt ist das Förderband lösungsmittelbeständig und/oder antistatisch aufgebaut. Besonders bevorzugt besteht das Förderband aus Kunststoff oder aus einer Stahl-Kunststoff-Kombination. Besonders bevorzugt weist das Förderband einen Polyamidträger auf.

Eine weitere vorteilhafte Weiterbildung sieht vor, dass der Lackaustrageinrichtung mindestens eine Nachreinigungseinrichtung nachgeschaltet ist. Damit lässt sich Farbe, die noch am Förderband haftet und nicht vom Abstreifmittel (Rakel) entfernt werden konnte, nachträglich noch entfernen und bei Bedarf dem Lackauffangbehältnis noch zuführen.

Eine weitere vorteilhafte Weiterbildung sieht vor, dass die Lackaustrageinrichtung entlang der Förderrichtung des Förderbandes verschiebbar angeordnet ist. Hierdurch ist es zum einen möglich, die Position der Lackaustrageinrichtung gegenüber dem Förderband zu ändern. Zum anderen können bei der Verwendung unterschiedlicher Farben beim Sprühvorgang auch verschiedene Abstreifbänder mit ihren Rakeln verwendet werden. Durch die verschiebbare Anordnung der Lackaustrageinrichtung, kann bestimmt werden welches Abstreifband Anwendung findet.

Eine besonders vorteilhafte Weiterbildung sieht vor, dass mindestens eine Walze vorgesehen ist, die ausgelegt ist, das Förderband in Richtung der Lackaustrageinrichtung zu drücken, wobei die Lackaustragseinrichtung mindestens ein Abstreifband mit Rakeln aufweist. Bevorzugt sind dabei Walzen in vertikaler Richtung von oben nach unten verschiebbar angeordnet. Entsprechend der gewünschten Farbe kann mittels der entsprechenden Walze das Förderband an die entsprechenden Rakeln gedrückt werden.

Besonders bevorzugt sind Abstreifbänder vorgesehen, die nacheinander in Reihe geschaltet sind um entsprechend der jeweiligen Farbe diese vom Förderband abzunehmen können. Damit lässt sich ein definierter Übergang bei Farbwechseln auf eine Länge von 200 mm erreichen.

In einer weiteren besonders bevorzugten Ausgestaltung der Erfindung rotieren die Abstreifbänder gegenläufig im oder gegen den Uhrzeigersinn. Damit lässt sich eine einseitige Beanspruchung des Förderbandes sowie des Abstreifbandes reduzieren.

Dadurch wird erreicht, dass bei einem Farbwechsel eine Schmutz/Wechselfarbe abgenommen werden kann und im Anschluss daran die neue Farbe sortenrein abnehmbar ist.

Bevorzugt ist eine Schnellspannvorrichtung zum Versetzen der verschiedenen Abstreifbänder vorgesehen. Besonders bevorzugt erfolgt das Versetzen motorisch oder pneumatisch.

Gemäß einem weiteren Aspekt der Vorrichtung ist eine Farbspritzanlage vorgesehen, die ein Lackaustragsystem vorsieht.

Eine Farbspritzanlage ist eine Spritzlackier-Anlage für die Verarbeitung von nahezu allen Lacksystemen wie z.B. 1 K, 2K-Lacke, wasserbasierten-, lösungsmittelbasierten- oder UV-härtenden Lacken.

Zum Lackieren werden bevorzugt Spritzpistolen verwendet. Die Spritzpistolen sind bevorzugt fest installiert oder beweglich angeordnet.

Weitere Vorteile und Einzelheiten der Erfindung werden anhand der in den Figuren dargestellten Ausführungsbeispiele erläutert. Die Figuren zeigen im Einzelnen:
- **Figur 1**: eine Seitenansicht eines erfindungsgemäßen Lackaustragsystems mit einem Reinigungs- und Rückführungssystem
- **Figur 2**: eine Frontansicht des erfindungsgemäßen Lackaustragsystems aus Figur 1,
- **Figur 3**: eine Detailansicht A des erfindungsgemäßen Lackaustragsystems aus Figur 1,
- **Figur 4**: eine Ansicht eines alternativen Abstreifbandes des erfindungsgemäßen Lackaustragsystems aus Figur 1,
- **Figur 5**: eine Ansicht eines alternativen Lackaustragsystems aus Figur 1,
- **Figur 6**: ein Detail einer Seitenansicht eines weiteren alternativen Lackaustragsystems aus Figur 1 und
- **Figuren 7a-d**: unterschiedliche Querschnitte einer Rakel.

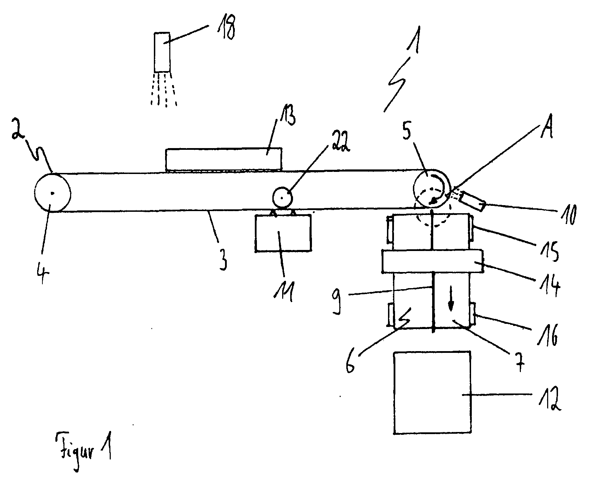

In **Figur 1** ist eine Seitenansicht eines erfindungsgemäßen Lackaustragsystems mit einem Reinigungs- und Rückführungssystem dargestellt. Das Lackaustragsystem ist sehr einfach aufgebaut und besteht im Wesentlichen aus den folgenden Bauteilen: Bandförderer 2 und Lackaustrageinrichtung 6. Ferner ist ein Lackauffangbehältnis 12 vorgesehen, dass zur Rückgewinnung des abgetragenen Lackes dient.

Der Bandförderer 2 weist ein Förderband 3, eine erste Umlenktrommel 4 und eine zweite Umlenktrommel 5 auf. Die Lackaustrageinrichtung 6 weist ein Abstreifband 7 auf, wobei eine Rakel 9 als Abstreifmittel 6 auf dem Abstreifband 7 vorgesehen ist. Die Lackaustrageinrichtung 6 ist unterhalb des Förderbandes 3 angeordnet und ist gegenüber dem Förderband um 90° gedreht. Das Förderband 3 rotiert dabei im Uhrzeigersinn.

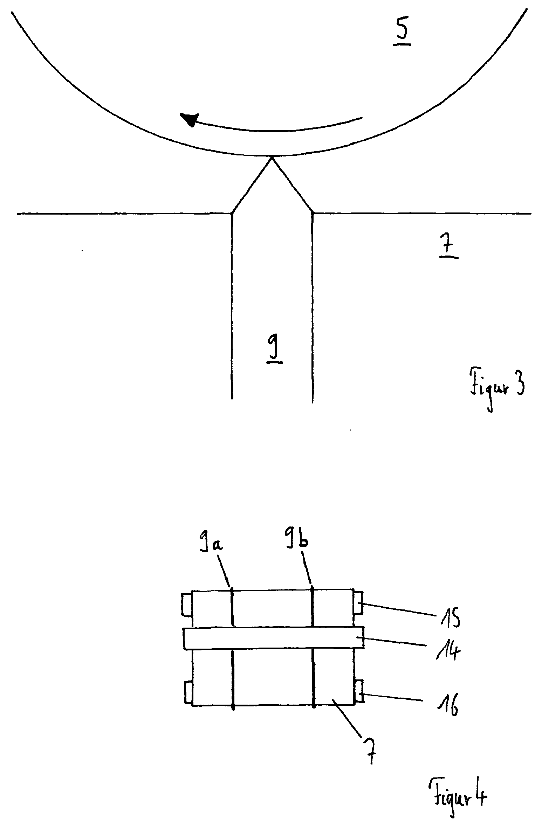

Die Rakel 9 ist auf dem Abstreifband 7 angebracht und mit diesem verbunden. Die Rakel 9 weist dabei eine dreiecksförmige Geometrie auf, die sich in etwa mittig vom Abstreifband 7 erhebt und durchgehend entlang der Laufrichtung des Abstreifbandes 7 verläuft (Figur 3).

Eine Befeuchtungseinrichtung 10 sowie eine Nachreinigungseinrichtung 11 sind ebenfalls vorgesehen.

Das Förderband 3 transportiert die zu lackierenden Werkstücke, die nach dem Lackiervorgang mittels Sprühpistole 18 vom Förderband 3 genommen werden. Das Förderband 3 wird dabei mittels der ersten und zweiten Umlenkrolle 4 und 5 angetrieben.

Beim Lackiervorgang wird neben dem eigentlich zu lackierenden Werkstück 12 auch das Förderband 3 mit dem Lack besprüht. Um das Förderband 3 von der haftenden Farbe zu befreien, wird die Farbe mittels der Befeuchtungseinrichtung 10 angefeuchtet.

Der eigentliche Farbabtrag erfolgt dann mittels der Lackaustrageinrichtung 6. Das Abstreifband 7 rotiert dabei kontinuierlich um die dafür vorgesehen Umlenktrommeln 15, 16, 17 der Lackaustrageinrichtung 6.

Die Rakel 9 des Abstreifbandes 7 liegt direkt über die ganze Breite des Förderbandes 3 an diesem an.

Infolge der Befeuchtung der Farbe mittels der Befeuchtungseinrichturig 10 und infolge des rotierenden Abstreifbandes 7 mit der durchgehenden Rakel 9 lässt sich die Farbe vom Förderband 3 leicht abnehmen.

Farbe die sich auf dem Abstreifband 7 befindet wird infolge der Rotation des Abstreifbandes 7 in Richtung eines Schabers 14 gefördert. Der Schaber 14 weist eine Form auf, die das Abstreifband 7 mit der Rakel 9 derart kämmt, so dass die Farbe abnehmbar ist. Die überschüssige Farbe wird dann in dem Lackauffangbehältnis 12 gesammelt und kann dem Farbkreislauf unproblematisch wieder zugeführt werden.

Farbe, die sich nicht abnehmen lässt, wird mittels einer Nachreinigungseinrichtung 11, die nach der Lackaustrageinrichtung 6 angeordnet ist, noch zusätzlich vom Förderband 3 gelöst. Mittels einer nach unten auf das Förderband 3 drückenden Walze 23 wird das Förderband 3 gegen die Nachreinigungseinrichtung 11 gedrückt. Die Nachreinigungseinrichtung 11 selbst weist zwei Rakel und ferner eine Befeuchtungseinrichtung (nicht dargestellt) auf.

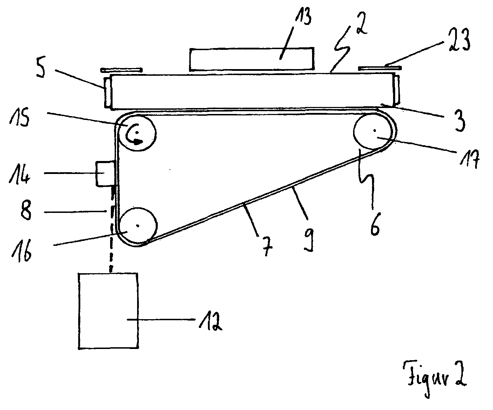

**Figur 2** zeigt eine Frontansicht des erfindungsgemäßen Lackaustragsystems aus Figur 1.

Dabei treiben die Umlenktrommel 15, 16 und 17 der Lackaustrageinrichtung 6 das Abstreifband 7 gegen den Uhrzeigersinn an. Der Schaber 14, der das Abstreifband 7 kämmt, nimmt die Lackfarbe von der Rakel 9 ab und führt sie dem Lackauffangbehältnis 12 zu (siehe gestrichelte Falllinie 8 der Farbe).

Dabei ist die Länge des horizontalen oberen Teils des Abstreifbandes 7 kleiner als die Breite des Förderbandes 3. Ein Kontakt der Rakel 9 mit der Kante des Förderbandes 3 ist somit ausgeschlossen.

Ferner sind Abdeckungen 23 zu beiden Seiten des Förderbandes 3 vorgesehen, die sich entlang der Bewegungsrichtung/Förderrichtung des Förderbandes 3 erstrecken.

Die Abdeckungen 23 decken eine Breite von ca. 10cm ab. Damit ist es möglich die Randbereiche des Förderbandes 3 keinem Farbauftrag auszusetzen. Eine Verschmutzung des Förderbandes 3 wird in diesen Bereichen vermieden.

In **Figur 3** ist eine Detailansicht A eines erfindungsgemäßen Lackaustragsystems aus Figur 1 dargestellt. Die Rakel 9 liegt am Förderband 3 an. Infolge der Rotation des Förderbandes 3 wird überschüssige Farbe in Richtung der Rakel 9 gefördert. Die Farbe wird infolge der Rotation des Förderbandes 3 zur rechten Seite der Rakel 9 hin abgezogen und vom Abstreifband 7 Richtung Schaber 14 befördert.

Die Spitze der Rakel ist V-förmig ausgebildet, wobei die Spitze einen Winkel von ca. 60° einschließt.

**Figur 4** zeigt ein Detail einer Ansicht einer alternativen Lackaustrageinrichtung des erfindungsgemäßen Lackaustragsystems aus Figur 1.

Anstelle der einen umlaufenden Rakel 9 auf dem Abstreifband 7, wie in Figur 1 dargestellt, sind zwei Rakeln 9a und 9b auf dem Abstreifband 7 angeordnet. Die Rakeln 9a und 9b weisen dabei eine dreiecksförmige Geometrie auf, die sich entlang des Abstreifbandes 7 erheben und durchgehend entlang der Laufrichtung des Abstreifbandes 7 verlaufen. Beide Rakeln 9a und 9b dienen dem Farbabtrag vom Förderband 3.

Durch Lösen des Abstreifbandes 7 aus der Lackaustrageinrichtung 6 kann das Band mittels Schnellspannvorrichtung (nicht dargestellt) um 180° gedreht werden, um so die jeweils andere Seite der Rakeln 9a und 9b zu verwenden.

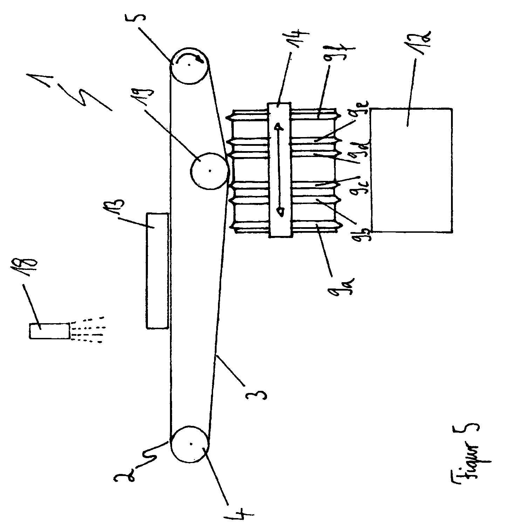

**Figur 5** zeigt eine Ansicht eines alternativen Lackaustragsystems aus Figur 1. Figur 5 unterscheidet sich von Figur 1 durch das Vorsehen einer zusätzlichen Walze 19 und einer abgewandelten Lackaustrageinrichtung 6. Eine Nachreinigungseinrichtung 11 ist vorliegend nicht dargestellt, ist aber auch vorgesehen.

Die Walze 19 ist der Umlenkrolle 5 nachgeschaltet. Die Walze 19 ist in vertikaler Richtung von oben nach unten verschiebbar angeordnet. Die Lackaustrageinrichtung 6 weist eine Vielzahl von Rakeln 9a bis 9f auf.

In Figur 5 liegen die Rakeln 9c und 9d infolge der nach unten in Richtung der Rakeln 9c und 9d drückenden Walze 19 am Förderband 3 an. Die Rakeln 9c und 9d tragen die Farbe vom Förderband 3 ab. Die Rakeln 9a und 9b sowie 9e und 9f haben dabei keinen Kontakt zum Förderband 3.

Im Falle eines Farbwechsels wird zunächst die Walze 19 aus ihrer jetzigen Position in die Ausgangsposition zurückgesetzt, also nach oben verfahren/verschoben, so dass sich das Förderband entspannen kann. Die Rakeln 9c und 9d haben jetzt keinen Kontakt mehr mit dem Förderband 3.

Infolge einer horizontalen Verschiebung der Rakeln 9a bis 9f (Pfeil), können je nach Bedarf entsprechend der neuen Farbe die Rakeln 9a und 9b oder die Rakeln 9e und 9f unterhalb der Walze 19 positioniert werden. Im Anschluss an die Positionierung bspw. der Rakeln 9a und 9b wird die Walze wieder nach unten in Richtung der Rakeln 9a und 9b gedrückt, so dass die neue Farbe vom Förderband 3 mittels Lackaustrageinrichtung 6 ausgetragen werden kann.

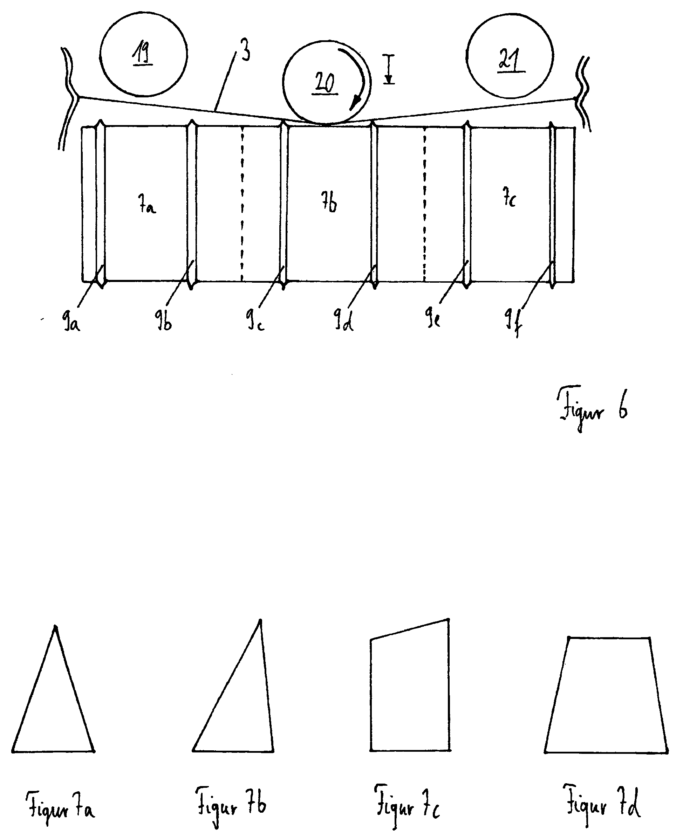

**Figur 6** zeigt ein Detail einer Seitenansicht eines weiteren alternativen Lackaustragsystems aus Figur 1. Das Lackaustragsystem 1 weist 3 Walzen 19, 20 und 21 auf.

Vorliegend drückt die Walze 20 das Förderband 3 nach unten in Richtung der Lackaustrageinrichtung 6 (siehe Pfeil). Währenddessen befinden sich die beiden anderen Walzen 19 und 21 in einer Position ohne Kontakt mit dem Förderband 3.

Im Gegensatz zu dem unter Figur 5 beschriebenen Verschiebungsvorgangs der Lackaustrageinrichtung 6 findet vorliegend keine Verschiebung der Lackaustrageinrichtung 6 statt, sondern ausschließlich eine Veränderung der Positionierung der Walzen 19 bis 21.

Die drei Walzen 19, 20 und 21 sind in vertikaler Richtung von oben nach unten verschiebbar angeordnet. Die Lackaustrageinrichtung 6 weist eine Vielzahl von Rakeln 9a bis 9f auf.

Entsprechend der gewünschten Farbe wird mittels der entsprechenden Walze 19, 20 bzw. 21 das Förderband 3 an die endsprechenden Rakeln 9a und 9b, 9c und 9d bzw. 9e und 9f gedrückt.

Gegenläufige Abstreifbänder 7a, 7b und 7c, die nacheinander geschaltet sind, sind ebenfalls denkbar.

Die **Figuren 7a****-d** zeigen unterschiedliche Querschnitte einer Rakel.

In Figur 7a ist eine V-förmige Rakel, in Figur 7b eine dreiecksförmige Rakel, in Figur 7c eine viereckige Rakel und in Figur 7d eine trapezförmige Rakel dargestellt.

Die V-förmige Rakel gemäß Figur 7a weist einen spitzen Winkel von ca. 35° auf.

Die dreiecksförmige Rakel gemäß Figur 7b weist einen steilen Anstieg an der farbabnehmenden Seite auf, wohingegen die der farbabnehmenden Seite gegenüberliegende Seite flacher ausgestaltet, was der Stabilität der Rakel dient.

Die viereckige Rakel gemäß Figur 7c weist abgeschrägte obere Kante auf, was ebenfalls der Stabilität der Rakel dient.

Die trapezförmige Rakel gemäß Figur 7d weist einen sich nach unten verbreiterten Stand auf, was ebenfalls der Stabilität der Rakel dient.

Mittels des erfindungsgemäßen Lackaustragsystems 1 wird eine kompakte Einheit bereitgestellt, die sich zudem durch einen einfachen technischen Aufbau auszeichnet und darüber hinaus eine verbesserte Lackrückgewinnung und Reinigung des Förderbandes 3 bewerkstelligt.

### Bezugszeichenliste

- 1: Lackaustragsystem
- 2: Bandförderer
- 3: Förderband
- 4: erste Umlenktrommel des Bandförderers
- 5: zweite Umlenktrommel des Bandförderers
- 6: Lackaustrageinrichtung
- 7: Abstreifband
- 8: Falllinie der Farbe
- 9: Abstreifmittel, Rakel
- 10: Befeuchtungseinrichtung
- 11: Nachreinigungseinrichtung
- 12: Lackauffangbehältnis
- 13: Werkstück
- 14: Schaber
- 15: erste Umlenktrommel der Lackaustrageinrichtung
- 16: zweite Umlenktrommel der Lackaustrageinrichtung
- 17: dritte Umlenktrommel der Lackaustrageinrichtung
- 18: Sprühpistole
- 19: erste Walze der Lackaustrageinrichtung
- 20: zweite Walze der Lackaustrageinrichtung
- 21: dritte Walze der Lackaustrageinrichtung
- 22: Walze für Nachreinigungseinrichtung
- 23: Abdeckung

## Patentansprüche

1. Lackaustragsystem (1) umfassend
- einen umlaufend antreibbaren Bandförderer (2) zum Transport zu lackierender Werkstücke, wobei der Bandförderer (2) ein Förderband (3) und wenigstens zwei Umlenktrommeln (4, 5) aufweist, und
- wenigstens eine Lackaustrageinrichtung (6) für das Förderband (3), wobei die Lackaustrageinrichtung (6) ein umlaufend antreibbares Abstreifband (7) und wenigstens zwei Umlenktrommeln (14, 15, 16) aufweist, wobei auf dem Abstreifband (7) wenigstens ein zusätzliches Abstreifmittel (9) vorgesehen ist, das gegen das Förderband (3) drückt,
**dadurch gekennzeichnet, dass** die Länge des horizontalen oberen Teils des Abstreifbandes (7) kleiner als die Breite des Förderbandes (3) ist.

2. Lackaustragsystem (1) gemäß einem der vorherigen Ansprüche, wobei das Abstreifmittel (9) eine Rakel ist.

3. Lackaustragsystem (1) gemäß Anspruch 2, wobei die Rakel(9) einen V-förmigen Querschnitt aufweist.

4. Lackaustragsystem (1) gemäß Anspruch 3, wobei der V-förmige Querschnitt einen Winkel von 20° bis 100°, bevorzugt von 40° bis 80° und besonders bevorzugt von 60° aufweist.

5. Lackaustragsystem (1) gemäß einem der Ansprüche 3 und 4, wobei der V-förmige Querschnitt eine Höhe von 3 mm bis 3 cm, bevorzugt von 5 mm bis 1,5 cm und besonders bevorzugt von 8 mm bis 15 mm aufweist.

6. Lackaustragsystem (1) gemäß einem der vorherigen Ansprüche, ferner mindestens eine Befeuchtungseinrichtung (10) aufweist.

7. Lackaustragsystem (1) gemäß einem der vorherigen Ansprüche, wobei die Geschwindigkeit des Abstreifbandes (7) kleiner gleich 20m/min ist.

8. Lackaustragsystem (1) gemäß einem der vorherigen Ansprüche, wobei der Lackaustrageinrichtung (6) mindestens eine Nachreinigungseinrichtung (11) nachgeschaltet ist.

9. Lackaustragsystem (1) gemäß einem der vorherigen Ansprüche, wobei die Lackaustrageinrichtung (6) entlang der Förderrichtung des Förderbandes (3) verschiebbar angeordnet ist.

10. Lackaustragsystem (1) gemäß einem der vorherigen Ansprüche, ferner aufweisend mindestens eine Walze (19, 20, 21), die ausgelegt ist, das Förderband (3) in Richtung der Lackaustrageinrichtung (6) zu drücken, wobei die Lackaustragseinrichtung (6) mindestens ein Abstreifband (7a - 7c) mit Rakeln (9a - 9f) aufweist.

## Claims

1. Paint discharge system (1) comprising
- a belt conveyor (2) that can be driven so as to rotate for transporting workpieces to be coated, wherein the belt conveyor (2) comprises a conveyor belt (3) and at least two guide pulleys (4, 5), and
- at least one paint discharge device (6) for the conveyor belt (3), wherein the paint discharge device (6) has a scraper belt (7) driven so as to rotate and at least two guide pulleys (14, 15, 16), wherein on the scraper belt (7) at least one additional scraping means (9) is provided which presses against the conveyor belt (3),
**characterized in that** the length of the horizontal upper part of the scraper belt (7) is less than the width of the conveyor belt (3).

2. Paint discharge system (1) according to one of the preceding claims, wherein the scraping means (9) is a doctor blade.

3. Paint discharge system (1) according to claim 2, wherein the doctor blade (9) has a V-shaped cross section.

4. Paint discharge system (1) according to claim 3, wherein the V-shaped cross section has an angle of from 20° to 100°, preferably from 40° to 80° and particularly preferably of 60°.

5. Paint discharge system (1) according to one of claims 3 and 4, wherein the V-shaped cross section has a height of from 3 mm to 3 cm, preferable from 5 mm to 1.5 cm and particularly preferably from 8 mm to 15 mm.

6. Paint discharge system (1) according to one of the preceding claims, which further comprises at least one humidifier (10).

7. Paint discharge system (1) according to one of the preceding claims, wherein the speed of the scraper belt (7) is less than or equal to 20 m/min.

8. Paint discharge system (1) according to one of the preceding claims, wherein there is at least one subsequent cleaning device (11) downstream of the paint discharge device (6).

9. Paint discharge system (1) according to one of the preceding claims, wherein the paint discharge device (6) is arranged movable along the conveying direction of the conveyor belt (3).

10. Paint discharge system (1) according to one of the preceding claims, further comprising at least one roller (19, 20, 21) which is designed to push the conveyor belt (3) in the direction of the paint discharge device (6), wherein the paint discharge device (6) comprises at least one scraper belt (7a - 7c) with doctor blades (9a - 9f).

## Revendications

1. Système d'évacuation de peinture (1) comprenant :
- un transporteur à courroie (2) pouvant être entraîné en rotation pour transporter des pièces usinées à peindre, le transporteur à courroie (2) comportant une courroie de transport (3) et au moins deux tambours de déviation (4, 5) ; et
- au moins un dispositif d'évacuation de peinture (6) pour la courroie de transport (3), le dispositif d'évacuation de peinture (6) comportant une courroie déflectrice (7) pouvant être entraînée en rotation et au moins deux tambours de déviation (14, 15, 16), au moins un moyen de déflexion (9) supplémentaire étant prévu sur la courroie déflectrice (7), ledit moyen appuyant contre la courroie de transport (3) ;
**caractérisé en ce que** la longueur de la partie supérieure horizontale de la courroie déflectrice (7) est inférieure à la largeur de la courroie de transport (3).

2. Système d'évacuation de peinture (1) selon l'une quelconque des revendications précédentes, le moyen de déflexion (9) étant une raclette.

3. Système d'évacuation de peinture (1) selon la revendication 2, la raclette (9) présentant une section transversale en forme de V.

4. Système d'évacuation de peinture (1) selon la revendication 3, la section transversale en forme de V présentant un angle allant de 20° à 100°, de façon préférée de 40° à 80° et de façon particulièrement préférée de 60°.

5. Système d'évacuation de peinture (1) selon l'une quelconque des revendications 3 et 4, la section transversale en forme de V présentant une hauteur allant de 3 mm à 3 cm, de façon préférée de 5 mm à 1,5 cm et de façon particulièrement préférée de 8 mm à 15 mm.

6. Système d'évacuation de peinture (1) selon l'une quelconque des revendications précédentes, comportant au moins un dispositif d'humidification (10).

7. Système d'évacuation de peinture (1) selon l'une quelconque des revendications précédentes, la vitesse de la courroie déflectrice (7) étant inférieure ou égale à 20 m/min.

8. Système d'évacuation de peinture (1) selon l'une quelconque des revendications précédentes, au moins un dispositif de nettoyage ultérieur (11) étant commuté en aval du dispositif d'évacuation de peinture (6).

9. Système d'évacuation de peinture (1) selon l'une quelconque des revendications précédentes, le dispositif d'évacuation de peinture (6) étant disposé de façon à pouvoir coulisser le long de la direction de transport de la courroie de transport (3).

10. Système d'évacuation de peinture (1) selon l'une quelconque des revendications précédentes, comportant en outre au moins un rouleau (19, 20, 21) conçu pour comprimer la courroie de transport (3) en direction du dispositif d'évacuation de peinture (6), le dispositif d'évacuation de peinture (6) comportant au moins une courroie déflectrice (7a - 7c) équipée de raclettes (9a - 9f).
